# EUROPEAN PATENT APPLICATION

(11) **EP 4 621 915 A1**
(43) Date of publication of application: **24.09.2025**
(21) Application number: 23907836.3
(22) Date of filing: 21.12.2023
(51) Int. Cl.: H01M 10/058, H01M 10/44, H01M 4/04, H01M 4/1395, H01M 4/38, H01M 10/052

(54) **LITHIUM SECONDARY BATTERY AND MANUFACTURING METHOD THEREFOR**

(30) Priority: 23.12.2022 KR 20220183612
(71) Applicant: LG Energy Solution, Ltd., Seoul 07335 (KR)
(72) Inventor: JUN, Hyun Min, Daejeon 34122 (KR); LEE, Yong Ju, Daejeon 34122 (KR); KIM, Dong Hyuk, Daejeon 34122 (KR); KIM, Do Hyeun, Daejeon 34122 (KR)
(74) Representative: Hoffmann Eitle
(86) International application number: PCT/KR2023/021343
(87) International publication number: WO 2024/136553

(57) **Abstract**

The present invention relates to a lithium secondary battery comprising: an anode comprising a silicon-based anode active material; a cathode; a separator interposed between the cathode and the anode; and an electrolyte, wherein the silicon-based anode active material comprises 30 parts by volume or less of crystalline silicon on the basis of 100 parts by volume of the total weight of the active material, and breakage of silicon-based anode active material particles is minimized such that side reactions with an electrolyte solution and electrode degradation are inhibited, and thus lifespan characteristics and resistance characteristics are improved.

## Description

### [TECHNICAL FIELD]

### CROSS-REFERENCE TO RELATED APPLICATIONS

This application claims the benefit of priority to Korean Patent Application No. 10-2022-0183612 filed on December 23, 2022, the disclosure of which is incorporated herein by reference in its entirety.

### Technical Field

The present invention relates to a lithium secondary battery, and a method of manufacturing the lithium secondary battery including an activation process.

### [BACKGROUND ART]

As technology development and demand for mobile devices increase, demand for secondary batteries as an energy source is rapidly increasing. Among the secondary batteries, a lithium secondary battery, which has high energy density and voltage, long cycle life and low self-discharge rate, has been commercialized and is widely used.

Generally, the lithium secondary battery is manufactured by the following method. A composition for forming an electrode active material layer containing an electrode active material is applied on an electrode current collector and then dried to prepare electrodes (positive electrode, negative electrode). A separator is interposed between the positive electrode and the negative electrode to form an electrode assembly, which is inserted into a battery case and sealed. Further, in order to determine whether the secondary battery is defective and to ensure the performance of the secondary battery, especially the stability of its lifespan, an activation process is always performed before the product is shipped. The activation process repeats charging and discharging to activate the battery and remove gas.

In the case of cells using silicon as a negative electrode active material, when lithium is intercalated into the silicon active material, especially during initial charging and discharging, stress occurs inside and outside the active material particles due to volume expansion, causing deformation and breakage of the particles. As a result, there is a problem that an active material that does not participate in an electrochemical reaction is generated to cause capacity loss, and a side reaction occurs due to exposure to an electrolyte.

However, when amorphous lithium silicate (a-Li-Si) in a stable form is formed in the silicon active material, the lithium is easily intercalated and deintercalated, and thus, the cell can be driven without deterioration in an actual charging/discharging cycle. To this end, in the activation process, it is necessary to convert crystalline silicon (c-Si) into amorphous lithium silicate (a-Li-Si) through charging and discharging.

Meanwhile, during the activation process, if the charging and discharging are performed at a low rate for stable activation, the activation time is too long, reducing productivity. If the activation is done quickly for productivity, lithium cannot be diffused throughout the active material layer, and rather, a region near the surface deteriorates, thereby degrading the lifespan characteristics.

Accordingly, the present invention seeks to provide a method of converting a crystalline (c-Si) portion of silicon into amorphous lithium silicate (a-Li-Si) maximally through stable and rapid activation, thereby minimizing deformation and breakage of active material particles and thus maximizing lifespan characteristics.

### [DISCLOSURE]

### [TECHNICAL PROBLEM]

The present invention is to provide a lithium secondary battery capable of preventing breakage of silicon active material particles used as a negative electrode active material, thereby suppressing the deterioration of an electrode, reducing the amount of gas generated by reducing a side reaction with an electrolyte, and improving resistance characteristics and life characteristics, and a method for manufacturing the same.

### [TECHNICAL SOLUTION]

In order to solve the above problem, according to an embodiment of the present invention, there is provided a lithium secondary battery including: a negative electrode including a silicon-based negative electrode active material; a positive electrode; a separator interposed between the positive electrode and the negative electrode; and an electrolyte, wherein the silicon-based negative electrode active material has 30 parts by volume or less of crystalline silicon based on 100 parts by volume of the total active material.

In order to solve the above problem, according to another embodiment of the present invention, there is provided a method for manufacturing a lithium secondary battery including the steps of: preparing an inactive lithium secondary battery including a negative electrode comprising a silicon-based negative electrode active material, a positive electrode, a separator interposed between the positive electrode and the negative electrode, and an electrolyte (S1); and activating the inactive lithium secondary battery (S2), wherein the activation of step (S2) includes a low rate charging section in which charging is performed at a rate of 0.01C to 0.07C to a charging end voltage of 4.0V or more.

### [ADVANTAGEOUS EFFECTS]

In the lithium secondary battery of the present invention, damage to the silicon-based negative electrode active material can be prevented, and crystalline form can be effectively converted to amorphous form by controlling an initial rate at a low rate; and the efficiency of the activation process can be improved through activation using a step-by-step rate increase, while preventing breakage of the negative electrode active material particles to suppress side reactions with the electrolyte and deterioration of the electrode, thereby improving resistance and lifespan characteristics.

### [DESCRIPTION OF DRAWINGS]

FIG. 1 is a graph showing a change in stress outside a negative electrode active material particle during initial charging for the examples and comparative examples.
FIG. 2 is a Raman spectrum result measured by using images showing amorphous, crystalline and mixed phases in individual colors by photographing the cross-section of the negative electrode of Example 2 after activation, and Raman spectroscopy.

### [BEST MODES OF THE INVENTION]

Hereinafter, the present invention will be described in more detail.

The terms or words used in the specification and claims of the present application should not be construed as being limited to their ordinary or dictionary meanings, but should be interpreted as meanings and concepts consistent with the technical spirit of the present invention, based on the principle that the inventor may adequately define the concepts of terms to best describe his invention.

### Lithium Secondary Battery

According to an embodiment of the present invention, a lithium secondary battery is an activated lithium secondary battery including: a negative electrode comprising a silicon-based negative electrode active material, a positive electrode, a separator interposed between the positive electrode and the negative electrode, and an electrolyte, wherein the silicon-based negative electrode active material is characterized by having 30 parts by volume or less of crystalline silicon based on 100 parts by volume of the total active material.

The silicon-based negative electrode active material is pure silicon, and is characterized by including silicon particles. In general, the pure silicon has excellent performance in theory, but was not easy to apply due to problems such as volume expansion. However, when applying the activation process according to an embodiment of the present invention, the performance can be efficiently implemented. That is, through the activation according to the present invention, amorphous silicon, crystalline silicon, and semi-amorphous silicon in the silicon-based negative electrode active material particles are controlled to exist in a specific range, thereby preventing the silicon particles from being broken. As a result, side reactions with the electrolyte and electrode deterioration can be suppressed, thereby providing a lithium secondary battery with improved lifespan characteristics.

Specifically, according to one embodiment of the present invention, the silicon-based negative electrode active material includes 5 to 30 parts by volume of crystalline silicon; 30 to 85 parts by volume of amorphous silicon; and 10 to 65 parts by volume of semi-amorphous silicon, wherein the semi-amorphous silicon may have a peak at a Raman shift value of more than 467 cm⁻¹ and less than 515 cm⁻¹ on a Raman spectrum graph using a Raman spectroscope.

In addition, the crystalline silicon may have a peak at a Raman shift value of about 467 cm⁻¹, and the amorphous silicon may have a peak at a Raman shift value of about 515 cm⁻¹. As described above, the silicon-based negative electrode active material has a crystalline silicon content of 5 to 30 parts by volume, and thus has a weak peak, whereby the crystalline state inside the silicon is controlled so that the intercalation and deintercalation reactions of lithium can occur stably, thereby inhibiting volume expansion and improving life characteristics.

Specifically, the content of the crystalline silicon may be 5 parts by volume or more, 10 parts by volume or more, preferably 12 parts by volume or more, and 27 parts by volume or less, 25 parts by volume or less, or 23 parts by volume or less. The content of the amorphous silicon may be 35 parts by volume or more, 40 parts by volume or more, 45 parts by volume or more, or 47 parts by volume or more, and 80 parts by volume or less, 75 parts by volume or less, 70 parts by volume or less, 65 parts by volume or less, or 60 parts by volume or less. The content of the semi-amorphous silicon may be 15 parts by volume or more, 20 parts by volume or more, 25 parts by volume or more, 30 parts by volume or more, or 32 parts by volume or more, and 60 parts by volume or less, 55 parts by volume or less, 50 parts by volume or less, 45 parts by volume or less, or 40 parts by volume or less.

According to one embodiment of the present invention, the silicon-based negative electrode active material may include semi-amorphous silicon, wherein the semi-amorphous silicon may have a peak at a Raman shift value of more than 467 cm⁻¹ and less than 515 cm⁻¹ on a Raman spectrum graph using a Raman spectroscope. Here, the semi-amorphous silicon may refer to silicon having a phase showing a peak detected through the Raman spectrum when the Raman shift is in the range described above, and may have two or more peaks. The semi-amorphous silicon may be a mixed phase of crystalline and amorphous silicons, and may exhibit both the characteristics of crystalline silicon and the characteristics of amorphous silicon. That is, it may be a silicon having a phase in a state that is not completely converted while the crystalline silicon is converted into an amorphous silicon during the crystalline phase control process of the silicon-based negative electrode active material. This phase is a phase capable of suppressing volume expansion between charging and discharging, which can contribute to improving the lifespan characteristics of a lithium secondary battery.

According to one embodiment of the present invention, the lithium secondary battery may include one or more unit electrodes having a positive electrode and a negative electrode, wherein a separator is interposed between the unit electrodes to form an electrode assembly, which may be accommodated into a battery case. The secondary battery may be a cylindrical, prismatic, or pouch-shaped secondary battery.

According to one embodiment of the present invention, the positive electrode and the negative electrode may be manufactured by applying a composition for forming an active material layer containing an electrode active material on a current collector and then drying the composition.

The composition for forming the positive electrode active material layer includes a positive electrode active material, wherein the positive electrode active material may be a material capable of causing an electrochemical reaction, for example, a lithium transition metal oxide. For example, it may be a layered compound including two or more transition metals, such as a lithium cobalt oxide (LiCoO₂), a lithium nickel oxide (LiNiO₂), or the like, which is substituted with one or more transition metals; a lithium manganese oxide substituted with one or more transition metals; a lithium nickel-based oxide represented by the formula of LiNi_{1-y}M_{y}O₂(where M is Co, Mn, Al, Cu, Fe, Mg, B, Cr, Zn, or Ga and includes at least one element of the above elements, 0.01≤y≤0.7); a lithium nickel cobalt manganese composite oxide represented by Li_{1+z}Ni_{b}Mn_{c}Co_{1-(b+c+d)}M_{d}O₍₂₋ₑ₎Aₑ (where -0.5≤z≤0.5, 0.1≤b≤0.8, 0.1≤c≤0.8, 0≤d≤0.2, 0≤e≤0.2, b+c+d<1; M = Al, Mg, Cr, Ti, Si or Y; A = F, P, or Cl), such as Li_{1+z}Ni_{1/3}Co_{1/3}Mn_{1/3}O₂, Li_{1+z}Ni_{0.4}Mn_{0.4}Co_{0.2}O₂; an olivine-based lithium metal phosphate represented by the formula of Li₁₊ₓM_{1-y}M'_{y}PO_{4-z}X_{z} (where M=transition metal, preferably Fe, Mn, Co, or Ni; M'=Al, Mg, or Ti; X=F, S, or N; -0.5≤x≤+0.5, 0≤y≤0.5, and 0≤z≤0.1), etc., but is not limited thereto. The positive electrode active material may be included in an amount of 80% to 99% by weight based on the total weight of the positive electrode active material layer.

The composition for forming the negative electrode active material layer includes a negative electrode active material, wherein the negative electrode active material is a silicon-based negative electrode active material and, and may be pure silicon particles as described above. The negative electrode active material may be included in an amount of 80% to 99% by weight based on the total weight of the negative electrode active material layer.

According to one embodiment of the present invention, the composition for forming a positive electrode active material layer and the composition for forming a negative electrode active material layer may optionally further include a binder, a conductive material, a filler, etc., as necessary, in addition to each of the active materials, wherein the binder, conductive material, and filler applied to the positive electrode and negative electrode may be the same or different from each other.

The binder is a component that assists in bonding between the conductive material, the active material, and the current collector, and is usually added in an amount of 0.1% to 10% by weight based on the total weight of the active material layer. Examples of the binder include polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, ethylenepropylene-diene polymer (EPDM), sulfonated EPDM, styrene-butadiene rubber, nitrile-butadiene rubber, fluorine rubber, and various copolymers thereof.

The conductive material is a component to further improve the conductivity of the active material, and may be added in an amount of 10% by weight or less, specifically 5% by weight or less, based on the total weight of the active material layer. The conductive material is not particularly limited as long as it has conductivity without causing a chemical change in the battery, and may be, for example, graphite such as natural graphite or artificial graphite; carbon black such as acetylene black, Ketjen black, channel black, furnace black, lamp black, and thermal black; conductive fibers such as carbon fiber and metal fiber; fluorinated carbon; metal powder such as aluminum powder and nickel powder; conductive whiskers such as zinc oxide and potassium titanate; conductive metal oxides such as titanium oxide; conductive materials such as polyphenylene derivatives.

The current collector is not particularly limited as long as it has a high conductivity without causing a chemical change in a battery, and may be, for example, copper, stainless steel, aluminum, nickel, titanium, fired carbon, copper or stainless steel that is surface-treated with carbon, nickel, titanium, silver, or the like, an aluminum-cadmium alloy, or the like. Additionally, the current collector may typically have a thickness of 3 to 500 µm, and may have fine irregularities formed on the surface of the current collector to increase the adhesion of the active material. For example, it may be used in various forms such as a film, a sheet, a foil, a net, a porous body, a foam, a non-woven fabric, or the like.

Meanwhile, according to one embodiment of the present invention, in the lithium secondary battery, the separator is to separate the negative electrode and the positive electrode, and to provide a passage for lithium ions to move. Any separator may be used without particular limitation as long as it is generally used as a separator in a lithium secondary battery. Particularly, a separator having excellent moisture-retention ability for an electrolyte while having low resistance to the migration of electrolyte ions is preferable. Specifically, a porous polymer film, for example, a porous polymer film made of polyolefin-based polymers such as ethylene homopolymer, propylene homopolymer, ethylene/butene copolymer, ethylene/hexene copolymer, and ethylene/methacrylate copolymer, or a laminated structure having two or more layers thereof may be used. In addition, a conventional porous nonwoven fabric, for example, a nonwoven fabric made of high melting point glass fiber, polyethylene terephthalate fiber, or the like may also be used. Further, in order to secure heat resistance or mechanical strength, a coated separator containing a ceramic component or a polymer material may also be used, and may optionally be used in a single-layer or multi-layer structure.

In addition, according to one embodiment of the present invention, the electrolyte may be an organic liquid electrolyte, an inorganic liquid electrolyte, a solid polymer electrolyte, a gel-type polymer electrolyte, a solid inorganic electrolyte, a molten inorganic electrolyte, or the like which may be used in the preparation of a lithium secondary battery, but is not limited thereto.

Specifically, the electrolyte may include an organic solvent and a lithium salt.

As the organic solvent, any solvent may be used without particular limitation as long as it can serve as a medium through which ions involved in the electrochemical reaction of the battery can move. Specifically, the organic solvent may be an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethylcarbonate (DEC), methylethylcarbonate (MEC), ethylmethylcarbonate (EMC), ethylene carbonate (EC), or propylene carbonate (PC) ; an alcohol-based solvent such as ethyl alcohol or isopropyl alcohol; nitriles such as R-CN (R is a straight, branched or cyclic C2-C20 hydrocarbon group, and may include a double-bond aromatic ring or ether bond); amides such as dimethylformamide; dioxolanes such as 1,3-dioxolane; or sulfolanes. Among them, the carbonate-based solvent is preferable, and a mixture of a cyclic carbonate (e.g., ethylene carbonate, propylene carbonate, etc.) having high ionic conductivity and high-dielectric constant capable of increasing charge/discharge performance of the battery and a low-viscosity linear carbonate-based compound (e.g., ethyl methyl carbonate, dimethyl carbonate, diethyl carbonate, etc.) is more preferable. In this case, excellent electrolyte performance can be obtained by mixing the cyclic carbonate and the linear carbonate in a volume ratio of about 1: 1 to about 1:9.

The lithium salt may be any compound without particular limitation as long as it can provide lithium ions used in a lithium secondary battery. Specifically, the anion of the lithium salt may be at least one selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻, and the lithium salt may be LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂. LiCl, LiI, LiB(C₂O₄)₂, or the like. The lithium salt is preferably used at a concentration ranging from 0.1 to 2.0 M. When the concentration of the lithium salt is within the above range, the electrolyte has an appropriate conductivity and viscosity, whereby excellent electrolyte performance can be exhibited, and lithium ions can effectively move.

**In** order to improve the lifespan characteristics of the battery, suppress a reduction in battery capacity and improve discharge capacity of the battery, the electrolyte may further include, in addition to the above electrolyte components, one or more additives, for example, a halo-alkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinones, N,N-substituted imidazolidine, ethylene glycol dialkyl ether, an ammonium salt, pyrrole, 2-methoxy ethanol, or aluminum trichloride. **In** this case, the additives may be included in an amount of 0.1% to 5% by weight based on the total weight of the electrolyte.

### Method of Manufacturing Lithium Secondary Batteries

According to an embodiment of the present invention, a method for manufacturing a lithium secondary battery includes the steps of: preparing an inactive lithium secondary battery including a negative electrode comprising a silicon-based negative electrode active material, a positive electrode, a separator interposed between the positive electrode and the negative electrode, and an electrolyte (S1); and activating the inactive lithium secondary battery (S2), wherein the activation of step (S2) includes a low rate charging section in which charging is performed at a rate of 0.01C to 0.07C to a charging end voltage of 4.0V or more.

Hereinafter, the method for manufacturing a lithium secondary battery according to an embodiment of the present invention will be described in detail.

### Step S1: Preparation of Inactive Lithium Secondary Battery

According to one embodiment of the present invention, step S1 is a step of providing a lithium secondary battery by injecting an electrolyte into an electrode assembly including a positive electrode, a negative electrode, and a separator interposed between the positive electrode and the negative electrode, that is, a step of assembling a lithium secondary battery before being activated.

Since the positive electrode, negative electrode, separator, and electrolyte have been described above, a detailed description thereof will be omitted.

### Step S2: Activation Step of Inactive Lithium Secondary Battery

According to one embodiment of the present invention, step S2 is a step of activating the assembled inactive lithium secondary battery through charging and discharging, wherein the activation of step (S2) includes a low rate charging section in which charging is performed at a rate of 0.01C to 0.07C to a charging end voltage of 4.0V or more.

Although the silicon-based negative electrode active material can exhibit excellent performance due to its high capacity characteristics, there are many problems in commercialization due to the problem of volume expansion. Specifically, in the case of silicon -based negative electrode active materials, in particular, in the case of negative electrode active materials comprising pure silicon particles, a process of converting crystalline silicon into amorphous silicon is essentially accompanied in the activation process. However, if the conversion to a stable form of amorphous phase is not made, a volume change between the intercalation and deintercalation of lithium may be severe, and the resulting internal stress may cause particles to be broken. This particle breakage phenomenon may cause a side reaction with the electrolyte, and may lead to a problem of lowering capacity by not participating in the reaction due to an electrical short circuit.

Accordingly, the present invention provides an activation method that can effectively convert crystalline silicon into amorphous silicon and also convert a part that has not been converted into amorphous silicon into semi-amorphous silicon in order to further minimize the crystalline silicon, thereby exhibiting the effect of reducing the breakage of negative electrode active material particles and improving lifespan characteristics.

In order to achieve the above effect, the activation step according to an embodiment of the present invention is characterized in that an initial charging rate is controlled at a low rate of 0.01C to 0.07C. The initial rate may preferably be 0.01C or more, 0.02C or more, 0.03C or more, 0.04C or more, and 0.07C or less, or 0.05C or less. When the first charge is performed at a rate of 0.1C or higher, stress is applied to the active material particles when lithium is intercalated into the silicon-based negative electrode active material, and the stress may exceed a limit value that the particles can withstand, thereby causing cracks. In other words, the first charging process is a process in which the lithium is first intercalated into the negative electrode active material. In this process, it is important to reduce the rate so that the particles are not broken and the conversion to an amorphous silicon can be induced by sequentially reacting with lithium from the surface of the negative electrode active material layer. This can be achieved by controlling the rate to 0.01C to 0.07C during first charging.

According to one embodiment of the present invention, the activation of step (S2) may include: a low-rate charging section in which charging is performed at a rate of 0.01C to 0.07C to a charging end voltage of 4.0V or more; and a high-rate discharging section in which discharging is performed to an interruption voltage of 2.7V to 3.3V at a rate equal to or higher than the low-rate charging rate.

During the first charging, charging is performed at a low rate, so that lithium and silicon are reacted slowly from the surface of the negative electrode active material layer, inducing conversion to an amorphous phase. Thereafter, subsequent charging and discharging may be performed at a relatively increased rate. In this case, the rate may be 3 to 10 times the low-rate charging rate, and preferably 4 to 8 times the low-rate charging rate. More specifically, the high-rate discharging rate may be in the range of 0.2C to 0.5C. When the high-rate discharge subsequent to the low-rate charging is performed within this range, the active material particles on the surface of the negative electrode active material layer are converted to a state in which lithium can be easily intercalated and deintercalated through the low-rate charging, whereby the activation process can be performed more quickly without deforming the particles, thereby improving the efficiency of the process.

Additionally, the discharge end voltage of the high-rate discharge section may be 2.7V to 3.3V, which may be higher than the discharge end voltage usually applied for activation. That is, when the discharge is terminated near the interruption voltage without completely discharged to the discharge end voltage, and then the charge and discharge are performed in the high-rate discharge section after the initial low-rate charging section, the shrinkage of the silicon expanded during the charging process is minimized, and the resulting stress generation is minimized, thereby preventing the fracture of the particles.

According to one embodiment of the present invention, the activation of step (S2) may include: a low-rate charging section in which charging is performed at a rate of 0.01C to 0.07C to a charging end voltage of 4.0V or more; a high-rate discharging section in which discharging is performed to an interruption voltage of 2.7V to 3.3V at a rate equal to or higher than the low-rate charging rate; and a charging/discharging section in which charging is performed to the charging end voltage at a rate equal to or higher than the high-rate discharging rate, and then the discharge is performed to a discharge end voltage of 2.8V or less.

After performing the low-rate charging section and the high-rate discharging section, a charging/discharging section may be performed in which charging and discharging is performed over the entire available voltage range. The rate in the charge/discharge section may be the same as or higher than the rate of the high-rate discharge. Since the crystalline Si of the active material near the surface of the negative electrode active material layer is converted to an amorphous Li-Si through the initial low-rate charging, even if a high-rate charging and discharging is proceeded subsequently, a space has already been formed where lithium can diffuse more quickly from the surface to the inside, and thus, the reaction of the inner active material can be easily induced, thereby improving the efficiency of the activation process. If the rate in the charging/discharging section is lower than the high-rate discharging rate, the reaction at the surface may be dominant, and thus, a thickness of the SEI film on the surface of the negative electrode may be increased, causing a problem of reduced capacity characteristics or ionic conductivity. Therefore, it may be desirable that the rate of the charging/discharging section is equal to or higher than the rate of the high-rate discharging section.

In addition, according to an embodiment of the present invention, in the charging and discharging section, the charging and discharging may be performed while increasing the rate step by step within the rate range equal to or more than the high-rate discharge rate, preferably in the range of 0.3C to 1.0C. In this case, for each of charging and discharging, a stepwise increasing method may be applied by changing the rate once, or by changing the rate two or more times. If this method of stepwise increasing the rate is applied, the efficiency of the activation process can be expected to increase. The charging and discharging of the charging and discharging section may be repeated one or more cycles. The activation may be completed only once, but may be performed two or more times depending on the internal state of the negative electrode active material.

According to one embodiment of the present invention, the charging end voltage in the activation step may be 4.0V to 4.8V, and the discharging end voltage may be 2.2V to 2.8V. These voltages may vary depending on what type of positive electrode active material is applied. The charge end voltage and discharge end voltage may usually be wider than the driving voltage range of the applied cell, and the capacity of the battery may be maximized by performing activation over a wider voltage range.

### EXAMPLES

Hereinafter, the present invention will be described in detail by way of examples. However, the examples according to the present invention may be modified in various different forms, and the scope of the present invention should not be construed as being limited to the examples described in detail below. The examples of the present invention are provided to explain the present invention more completely to those skilled in the art.

### Preparation Example

A positive electrode slurry was prepared by mixing LiNi_{0.8}Co_{0.1}Mn_{0.1}O₂ as a positive electrode active material, a carbon nanotube as a conductive material, and PVdF as a binder at a weight ratio of 92.8:0.8:1.4 in N-methyl-2-pyrrolidone (NMP) solvent. This slurry was applied to one side of an aluminum current collector, dried, and rolled to produce a positive electrode.

Pure silicon with a particle size of about 5 µm (crystal size of about 200 nm) as a negative electrode active material, Super C65 as a conductive material, SBR as a binder, and CMC as a thickener were mixed at a weight ratio of 95.6:1.5:2.3 :1.1 in N-methyl-2-pyrrolidone (NMP) solvent to prepare a negative electrode slurry. The negative electrode slurry was applied to one side of a copper current collector, dried, and rolled to prepare a negative electrode.

A separator was interposed between the positive electrode and the negative electrode to prepare an electrode assembly, which was located inside a battery case. Thereafter, an electrolyte was injected to prepare an inactive lithium secondary battery.

Here, as the electrolyte, an electrolyte was used in which 1M of LiPF₆ was dissolved in an organic solvent where ethylene carbonate:ethylmethyl carbonate:diethyl carbonate were mixed in a volume ratio of 3:3:4.

### Example 1

Inactive lithium secondary battery was activated as follows: the secondary battery prepared in the preparation example was charged to 4.2V at a rate of 0.01C and then discharged to 3V at a rate of 0.20C; afterwards, the lithium secondary battery was charged again to 4.2V at a rate of 0.20C and then discharging it to 2.5V.

### Example 2

Inactive lithium secondary battery was activated as follows: the secondary battery prepared in the preparation example was charged to 4.2V at a rate of 0.05C and then discharged to 3V at a rate of 0.33C; thereafter, the lithium secondary battery was charged again to 4.2V at a rate of 0.33C and then discharging it to 2.5V.

### Example 3

Inactive lithium secondary battery was activated as follows: the secondary battery prepared in the preparation example was charged to 4.2V at a rate of 0.07C and then discharged to 3V at a rate of 0.5C; thereafter, the lithium secondary battery was charged again to 4.2V at a rate of 0.5C and then discharging it to 2.5V.

### Example 4

Inactive lithium secondary battery was activated as follows: the secondary battery prepared in the preparation example was charged to 4.2V at a rate of 0.05C and then discharged to 3V at a rate of 0.33C; thereafter, the lithium secondary battery was charged again to 4.2V while changing the rate stepwise from 0.33C to 0.5C, and then discharging it to 2.5V at a rate of 0.5C.

### Example 5

Inactive lithium secondary battery was activated as follows: the secondary battery prepared in the preparation example was charged to 4.2V at a rate of 0.05C and then discharged to 3V at a rate of 0.33C; thereafter, the lithium secondary battery was charged again to 4.2V at a rate of 0.4C and then discharging it to 2.5V.

### Comparative Example 1

Inactive lithium secondary battery was activated as follows: the secondary battery prepared in the preparation example was charged to 4.2V at a rate of 0.33C and then discharged to 3V at a rate of 0.33C; thereafter, the lithium secondary battery was charged again to 4.2V at a rate of 0.33C and then discharging it to 2.5V.

### Comparative Examples 2 to 6

In Comparative Examples 2 to 6, the inactive lithium secondary batteries were activated in the same manner as in Comparative Example 1, except that the rate was 0.1C, 0.2C, 0.5C, 1C and 6C, respectively.

### Experimental Example 1: Change in Stress inside Silicon Particle according to Charging Rate

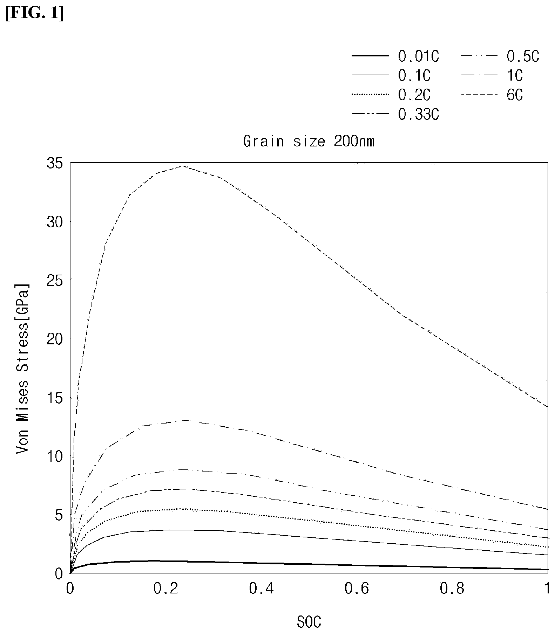

For Example 1 and Comparative Examples 1 to 6, changes in stress of silicon particles as negative electrode active materials were measured for each SOC according to the initial rate during charging. For the measurement, CAD three-dimensional shapes of Si particles with polycrystals were designed as random polycrystal shapes using a Voronoi diagram technique. Constants such as a lithium diffusion coefficient inside silicon were applied by referring to previously reported papers, and the designed shapes were used to calculate the stress changes of silicon particles (negative electrode active material) for each SOC according to the initial rate using Comsol Multiphysics software. The results are shown in FIG. 1.

Referring to FIG. 1, it can be seen that the stress change inside the silicon particle is extreme as the initial rate is changed during activation, and the particle is broken when subjected to stress of about 2 GPa or more. Therefore, it can be confirmed that in the negative electrodes of Comparative Examples 1 to 6 except for Example 1, some of the active material particles were broken.

### Experimental Example 2: Cross-sectional Analysis of Negative Electrode after Activation.

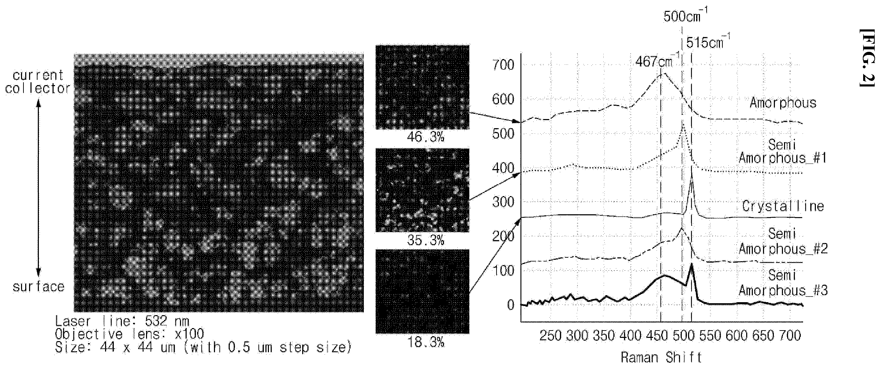

The completely activated batteries of the examples and comparative examples were disassembled and washed in DMC solvent for 1 hour to remove organic substances such as SEI Layer of the negative electrode. The electrodes were then sampled and cut using an ion milling equipment (IM-4000, Hitachi) so that the vertical cross section of the electrodes could be observed. Afterwards, a Raman spectroscope (NTEGRA SPECTRA, NT_MDT) was used to obtain a Raman spectrum of the area using a laser with a resolution of 500 nm x 500 nm on the cut negative electrode cross section. In summary, regarding the amount of each of amorphous Si (467 cm⁻¹), crystalline Si (515 cm⁻¹) and semi-amorphous (more than 467 cm⁻¹ and less than 515 cm⁻¹), the result of Example 2 is shown in FIG. 2, and the results of other examples and comparative examples are shown in Table 1 below.

**[Table 1]**

| | Crystalline phase | Semi-amorphous phase | Amorphous phase |
|---|---|---|---|
| Example 1 | 15.1 | 31.6 | 53.3 |
| Example 2 | 18.3 | 35.4 | 46.3 |
| Example 3 | 20.2 | 33.9 | 45.9 |
| Example 4 | 17.5 | 34.7 | 47.8 |
| Example 5 | 22.3 | 32.6 | 45.1 |
| Comparative Example 1 | 36.1 | 30.0 | 33.9 |
| Comparative Example 2 | 31.6 | 27.1 | 41.3 |
| Comparative Example 3 | 34.7 | 29.9 | 35.4 |
| Comparative Example 4 | 40.3 | 29.4 | 30.3 |
| Comparative Example 5 | 44.6 | 28.1 | 27.3 |
| Comparative Example 6 | 51.3 | 26.9 | 21.8 |

Referring to FIG. 2, It can be confirmed that the part marked in red is amorphous silicon, the part marked in blue is crystalline silicon, and the part marked in green is semi-amorphous, and in the case of the negative electrode active material of Example 2, the amorphous silicon is 46.3% of the total volume, and crystalline silicon is a relatively small amount of 18.3%. If the crystalline content is high, it means that there is a high possibility that the electrode will deteriorate early. When amorphous and crystalline silicons are converted to the same level as in Example 2, an excellent effect as a negative electrode material can be exhibited.In addition, referring to Table 1, it can be confirmed that in the case of Examples 1 to 5, the ratio of the crystalline phase is mostly a small value of 25% or less, the ratio of the semi-amorphous phase is about 31% or more, and the ratio of the amorphous phase is also 45% or more, whereas in the comparative examples, the ratio of the crystalline phase is significantly higher, and the ratio of the amorphous phase and the semi-amorphous phase is low, so that the possibility of early electrode deterioration is quite high as described above.

### Experimental Example 3: Evaluation of Lifespan Characteristics of Lithium Secondary Battery

Charging and discharging were performed on each of the lithium secondary batteries of Examples 1 to 5 and Comparative Examples 1 to 6, and the lifespan characteristics of the secondary batteries were evaluated using the following method. The results are shown in Table 1 below.
* Lifespan characteristics (capacity retention rate): Charging and discharging were performed at 1.0C from 1 cycle to 200 cycles.
Charging conditions: CC (constant current)/CV (constant voltage) (4.2V/0.05C current cut-off)
Discharging conditions: CC (constant current) conditions 3V

The capacity retention rate was derived by the following calculation: Capacity retention rate (%) = (discharge capacity at 200th cycle / first discharge capacity) × 100

When evaluating lifespan under the above methods and conditions, the resistance was calculated using the voltage and current during discharge ((V₀-V₁)/I, where V₀ is a discharge start voltage, V₁ is a voltage after 60 seconds of discharge, and I is an applied current), and the resistance increase rate was calculated by the following equation using the post-cycle resistance compared to the initial resistance. The results are shown in Table 2 below. Resistance increase rate (%) = [(resistance after 200 discharges / initial resistance) - 1] × 100

**[Table 2]**

| | Capacity retention rate (%) | Resistance increase rate (%) |
|---|---|---|
| Example 1 | 91 | 32 |
| Example 2 | 90 | 36 |
| Example 3 | 89 | 39 |
| Example 4 | 90 | 37 |
| Example 5 | 88 | 42 |
| Comparative Example 1 | 80 | 69 |
| Comparative Example 2 | 83 | 61 |
| Comparative Example 3 | 81 | 66 |
| Comparative Example 4 | 76 | 78 |
| Comparative Example 5 | 71 | 89 |
| Comparative Example 6 | 63 | 102 |

Referring to Table 2, it can be seen that Examples 1 to 5 according to the present invention have superior lifespan characteristics and resistance characteristics compared to Comparative Examples 1 to 6 in which the initial rate was increased. This can be said to be an effect resulting from the fact that the ratio of the crystalline phase in silicon is high and the ratio of the amorphous phase and semi-amorphous phase is low in the case of Comparative Examples 1 to 6 compared to Examples 1 to 5.

## Claims

1. A lithium secondary battery, comprising:
a negative electrode including a silicon-based negative electrode active material;
a positive electrode;
a separator interposed between the positive electrode and the negative electrode; and
an electrolyte,
wherein the silicon-based negative electrode active material comprises silicon particles, and comprises 30 parts by volume or less of crystalline silicon based on 100 parts by volume of the negative electrode active material.

2. The lithium secondary battery according to claim 1, wherein the silicon-based negative electrode active material comprises 5 to 30 parts by volume of crystalline silicon; 30 to 85 parts by volume of amorphous silicon; and 10 to 65 parts by volume of semi-amorphous silicon,
wherein the semi-amorphous silicon has a peak at a Raman shift value of more than 467 cm⁻¹ and less than 515 cm⁻¹ on a Raman spectrum graph using a Raman spectroscope.

3. The lithium secondary battery according to claim 1, wherein the silicon-based negative electrode active material comprises 5 to 25 parts by volume of crystalline silicon; 40 to 70 parts by volume of amorphous silicon; and 25 to 55 parts by volume of semi-amorphous silicon,
wherein the semi-amorphous silicon has a peak at a Raman shift value of more than 467 cm⁻¹ and less than 515 cm⁻¹ on a Raman spectrum graph using a Raman spectroscope.

4. The lithium secondary battery according to claim 1, wherein the lithium secondary battery is activated.

5. The lithium secondary battery according to claim 4, wherein the activation includes a process in which charging is performed at a rate of 0.01C to 0.07C to a charging end voltage of 4.0V or more.

6. The method of the lithium secondary battery according to claim 1, wherein the positive electrode includes a positive electrode active material,
wherein the positive electrode active material is at least one selected from the group consisting of lithium cobalt oxide, lithium nickel oxide, lithium manganese oxide, lithium nickel-based composite oxide, lithium manganese-based composite oxide, and lithium transition metal phosphate.

7. A method for manufacturing a lithium secondary battery, comprising the steps of:
preparing an inactive lithium secondary battery including a negative electrode comprising a silicon-based negative electrode active material, a positive electrode, a separator interposed between the positive electrode and the negative electrode, and an electrolyte (S1); and
activating the inactive lithium secondary battery (S2),
wherein the activation of step (S2) includes a low-rate charging section in which charging is performed at a rate of 0.01C to 0.07C to a charging end voltage of 4.0V or more.

8. The method for manufacturing the lithium secondary battery according to claim 7, wherein the activation of step (S2) includes:
the low-rate charging section in which charging is performed at a rate of 0.01C to 0.07C to a charging end voltage of 4.0V or more; and
a high-rate discharging section in which discharging is performed to an interruption voltage of 2.7V to 3.3V at a rate equal to or higher than the low-rate charging rate.

9. The method for manufacturing the lithium secondary battery according to claim 7, wherein the activation of step (S2) includes:
the low-rate charging section in which charging is performed at a rate of 0.01C to 0.07C to a charging end voltage of 4.0V or more;
a high-rate discharging section in which discharging is performed to an interruption voltage of 2.7V to 3.3V at a rate equal to or higher than the low-rate charging rate; and
a charging/discharging section in which charging is performed to the charging end voltage at a rate equal to or higher than the high-rate discharging rate, and then the discharge is performed to a discharge end voltage of 2.8V or less.

10. The method for manufacturing the lithium secondary battery according to claim 9, wherein in the charging and discharging section, the charging and discharging are performed while increasing the rate stepwise within a rate range equal to or more than the high-rate discharge rate.

11. The method for manufacturing the lithium secondary battery according to claim 9, wherein in the charging and discharging section, the charging and discharging are performed while increasing the rate stepwise in a range of 0.3C to 1.0C.

12. The method for manufacturing the lithium secondary battery according to claim 7, wherein the low-rate charging rate is 0.02C to 0.05C.

13. The method for manufacturing the lithium secondary battery according to claim 9, wherein the high-rate discharging rate is 3 to 10 times greater than the low-rate charging rate.

14. The method for manufacturing the lithium secondary battery according to claim 9, wherein the high-rate discharging rate is 0.2C to 0.5C.

15. The method for manufacturing the lithium secondary battery according to claim 7, wherein the charging end voltage is 4.0V to 4.8V, and the discharging end voltage is 2.2V to 2.8V.
